Europäisches Patentamt

European Patent Office

Office européen des brevets

(19)

(11)  **EP 1 117 741 B1**

(12)  **EUROPÄISCHE PATENTSCHRIFT**

(45) Veröffentlichungstag und Bekanntmachung des Hinweises auf die Patenterteilung:
**18.08.2004  Patentblatt 2004/34**

(51) Int Cl.⁷: **C08L 67/02**
// (C08L67/02, 51:04),
C08L25:12

(21) Anmeldenummer: **99970101.4**

(22) Anmeldetag: **29.09.1999**

(86) Internationale Anmeldenummer:
**PCT/EP1999/007208**

(87) Internationale Veröffentlichungsnummer:
**WO 2000/020500 (13.04.2000 Gazette 2000/15)**

(54)  **VERWENDUNG THERMOPLASTISCHER POLYESTERFORMMASSEN FÜR KRAFTFAHRZEUG-INNENANWENDUNGEN**

USE OF THERMOPLASTIC MOULDING MATERIALS FOR INTERNAL APPLICATIONS IN A MOTOR VEHICLE

UTILISATION DE MATIERES MOULABLES THERMOPLASTIQUES A BASE DE POLYESTER DESTINEES A ETRE UTILISEES A L'INTERIEUR D'UN VEHICULE

(84) Benannte Vertragsstaaten:
**AT BE CH CY DE DK ES FI FR GB GR IE IT LI LU MC NL PT SE**

(30) Priorität: **01.10.1998  DE 19845317**

(43) Veröffentlichungstag der Anmeldung:
**25.07.2001  Patentblatt 2001/30**

(73) Patentinhaber: **BASF AKTIENGESELLSCHAFT**
**67056 Ludwigshafen (DE)**

(72) Erfinder:
- **FISCHER, Michael**
  **D-67071 Ludwigshafen (DE)**
- **WEBER, Martin**
  **D-67487 Maikammer (DE)**
- **GINSS, Christophe**
  **F-67120 Wolxheim (FR)**
- **BERZ, Stephan**
  **D-60529 Frankfurt am Main (DE)**
- **KRESS, Norbert**
  **D-67069 Ludwigshafen (DE)**

(74) Vertreter: **Isenbruck, Günter, Dr.**
**Isenbruck, Bösl, Hörschler, Wichmann, Huhn,**
**Patentanwälte**
**Theodor-Heuss-Anlage 12**
**68165 Mannheim (DE)**

(56) Entgegenhaltungen:
**EP-A- 0 131 202          EP-A- 0 310 977**
**EP-A- 0 310 978          EP-A- 0 392 357**
**EP-A- 0 643 104          DE-A- 3 733 839**
**DE-A- 19 750 627**

- **BLINNE, G. ET AL.: PLASTVERARBEITER, Bd. 47, Nr. 3, 1996, Seite 82,85 XP002126700**
- **CHEMICAL ABSTRACTS, vol. 123, no. 24, 11. Dezember 1995 (1995-12-11) Columbus, Ohio, US; abstract no. 315814, XP002126701 & JP 07 173363 A (DAICEL CHEM.) 11. Juli 1995 (1995-07-11)**
- **CHEMICAL ABSTRACTS, vol. 125, no. 24, 9. Dezember 1996 (1996-12-09) Columbus, Ohio, US; abstract no. 302861, XP002126702 & JP 08 225723 A (DENKI KAGAKU KOGYO KK) 3. September 1996 (1996-09-03)**

**Beschreibung**

Die Erfindung betrifft die Verwendung glasfaserverstärkter thermoplastischer Formmassen zur Herstellung von Formteilen für den Innenraum von Kraftfahrzeugen.

Formteile aus polymeren Werkstoffen, die im Innenraum von Kraftfahrzeugen zur Anwendung kommen, müssen hohen Anforderungen bezüglich ihrer mechanischen Eigenschaften, ihrer Oberflächeneigenschaften, ihres Alterungsverhaltens sowie ihres Geruchsverhaltens genügen. Für die Herstellung von Formteilen für Kraftfahrzeug-Innenanwendungen werden bisher verschiedene polymere Werkstoffe verwendet.

Ein verwendeter Werkstoff ist glasfaserverstärktes ABS/PC (Polymer-Blend aus Acrylnitril/Butadien/Styrol-Copolymer und Polycarbonat). Dieser Werkstoff weist jedoch eine nur unzureichende UV-Beständigkeit, ein schlechtes Wärmealterungsverhalten (Zähigkeit und Bruchdehnung nach Wärmelagerung), ungünstige Oberflächeneigenschaften sowie insbesondere ein schlechtes Geruchsverhalten auf. Unter Geruchsverhalten wird die Neigung von Werkstoffen verstanden, nach einer Temperatur- und Klimalagerung von festgelegter Dauer flüchtige Bestandteile abzugeben, die einen wahrnehmbaren Geruch aufweisen.

Als weiterer Werkstoff kommt glasfaserverstärktes, zähmodifiziertes SMA (Styrol/Maleinsäureanhydrid-Copolymer) zum Einsatz. Auch SMA weist nur unzureichende Oberflächeneigenschaften, eine schlechte Wärmealterungsbeständigkeit sowie ein schlechtes Geruchsverhalten auf.

Die vorstehend genannten Werkstoffe weisen zudem eine nur schlechte Wärmeformbeständigkeit auf, die in einer nur geringen Vicat B-Erweichungstemperatur (Vicat B < 130°C) zum Ausdruck kommt. Eine gute Wärmeformbeständigkeit und Wärmealterungsbeständigkeit der eingesetzten Werkstoffe ist jedoch essentiell, da sich der Kraftfahrzeug-Innenraum, insbesondere unter Einwirkung von Sonnenstrahlung, erheblich aufheizen kann.

Die vorstehend genannten Nachteile konnten mit Polymerwerkstoffen auf der Basis von PBT/ASA/PSAN (Polymerblends aus Polybutylenterephthalat, Acrylnitril/Styrol/Acrylsäureester-Copolymer und Polystyrol/Acrylnitril-Copolymer) behoben werden. Solche Werkstoffe sind in DE-A 39 11 828 allgemein offenbart. Die Ausführungsbeispiele beziehen sich auf Formmassen mit einem hohen Acrylnitril-Anteil der PSAN-Copolymere. Formteile aus diesen Formmassen weisen jedoch ebenfalls ein schlechtes Emissionsverhalten auf.

Aufgabe der Erfindung ist es geeignete Formmassen zur Verfügung zu stellen, die ein günstiges Eigenschaftsprofil hinsichtlich ihrer mechanischen, optischen und sensorischen Eigenschaften sowie insbesondere eine gute Wärmeformbeständigkeit, Wärmealterungsbeständigkeit und ein gutes Emissionsverhalten und/oder Geruchsverhalten aufweisen, zur Herstellung von Formteilen, die sich zur Verwendung im Innenraum von Kraftfahrzeugen eignen.

Gelöst wird die Aufgabe durch dir Verwendung von glasfaserverstärkten thermoplastischen Formmassen, enthaltend, bezogen auf die Summe der Komponenten A bis D und gegebenenfalls E und F, die insgesamt 100 Gew.-% ergibt,

a) 10 bis 97 Gew.-% mindestens eines aromatischen Polyesters als Komponente A,

b) 1 bis 50 Gew.-% mindestens eines teilchenförmigen Pfropfcopolymerisats mit einer Glasübergangstemperatur der Weichphase unterhalb von 0°C und einer mittleren Teilchengröße von 50 bis 1000 nm als Komponente B,

c) 1 bis 50 Gew.-% mindestens eines Copolymerisats aus den Monomeren

c1) 50 bis 90 Gew.-% mindestens eines vinylaromatischen Monomeren als Komponente C1 und

c2) 10 bis 25 Gew.-% Acrylnitril und/oder Methacrylnitril als Komponente C2,

als Komponente C,

d) 1 bis 50 Gew.-% Glasfasern als Komponente D,

e) 0 bis 25 Gew.-% weitere, mit den Komponenten A und/oder C homogen mischbare oder in diesen dispergierbare, verträgliche Polymere als Komponente E,

f) 0 bis 10 Gew.-% übliche Zusatzstoffe wie UV-Stabilisatoren, Ruß, Pigmente, Oxidationsverzögerer, Gleit- und Entformungsmittel als Komponente F.

Als Komponente A enthält die Formmasse 10 bis 97 Gew.-%, bevorzugt 20 bis 75 Gew.-%, besonders bevorzugt 30 bis 60 Gew.-% eines aromatischen Polyesters. Die in den erfindungsgemäßen Formmassen enthaltenen Polyester sind an sich bekannt.

Die Herstellung der Polyester kann durch Reaktion von Terephthalsäure, deren Estern oder anderer esterbildender Derivate mit 1,4-Butandiol, 1,3-Propandiol bzw. 1,2-Ethandiol in an sich bekannter Weise erfolgen.

Bis zu 20 mol-% der Terephthalsäure können durch andere Dicarbonsäuren ersetzt werden. Nur beispielsweise seien hier Naphthalindicarbonsäuren, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Auch bis zu 20 mol-% der Dihydroxyverbindungen 1,4-Butandiol, 1,3 Propandiol bzw. 1,2-Ethandiol können durch andere Dihydroxyverbindungen, z.B. 1,6-Hexandiol, 1,4-Hexandiol, 1,4-Cyclohexandiol, 1,4-Di(hydroxymethyl)cyclohexan, Bisphenol A, Neopentylglykol, Mischungen dieser Diole sowie esterbildende Derivate derselben ersetzt werden.

Bevorzugte aromatische Polyester sind Polyethylenterephthalat (PET), Polytrimethylenterephthalat (PTT) und insbesondere Polybutylenterephthalat (PBT), die ausschließlich aus Terephthalsäure und den entsprechenden Diolen 1,2-Ethandiol, 1,3-Propandiol und 1,4-Butandiol gebildet sind. Die aromatischen Polyester können auch ganz oder teilweise in Form von Polyester-Recyclaten, wie PET-Mahlgut aus Flaschenmaterial oder aus Abfällen der Flaschenherstellung eingesetzt werden.

In einer besonders bevorzugten Ausführungsform besteht die Komponente A aus

a1) 60 bis 99 Gew.-%, bevorzugt 80 bis 95 Gew.-% Polybutylenterephthalat und

a2) 1 bis 40 Gew.-%, bevorzugt 5 bis 20 Gew.-% Polyethylenterephthalat.

Als Komponente B enthält die Formmasse 1 bis 50 Gew.-%, bevorzugt 1 bis 25 Gew.-%, besonders bevorzugt 2 bis 15 Gew.-%, insbesondere 2 bis 10 Gew.-% mindestens eines teilchenförmigen Pfropfcopolymerisats mit einer Glasübergangstemperatur der Weichphase unterhalb von 0°C und einer mittleren Teilchengröße von 50 bis 1000 nm.

Vorzugsweise handelt es sich bei Komponente B um ein Pfropfcopolymerisat aus

b1) 50 bis 90 Gew.-% einer teilchenförmigen Pfropfgrundlage B1 mit einer Glasübergangstemperatur unterhalb 0°C und

b2) 10 bis 50 Gew.-% einer Pfropfauflage B2 aus den Monomeren

b21) 50 bis 90 Gew.-% eines vinylaromatischen Monomeren als Komponente B21 und

b22) 10 bis 49 Gew.-% Acrylnitril und/oder Methacrylnitril als Komponente B22.

Die teilchenförmige Pfropfgrundlage B1 kann aus 70 bis 100 Gew.-% eines konjugierten Diens und 0 bis 30 Gew.-% eines difunktionellen Monomeren mit zwei olefinischen, nicht konjugierten Doppelbindungen bestehen. Solche Pfropfgrundlagen werden beispielsweise bei ABS-Polymeren oder MBS-Polymeren als Komponente B eingesetzt.

Gemäß einer bevorzugten Ausführungsform der Erfindung besteht die Pfropfgrundlage B 1 aus den Monomeren

b11) 75 bis 99,9 Gew.-% eines $C_1$-$C_{10}$-Alkylesters der Acrylsäure als Komponente B 11,

b12) 0,1 bis 10 Gew.-% mindestens eines polyfunktionellen Monomeren mit mindestens zwei olefinischen, nicht konjugierten Doppelbindungen als Komponente B12 und

b13) 0 bis 24,9 Gew.-% eines oder mehrerer weiterer copolymerisierbarer Monomere als Komponente B13.

Bei der Pfropfgrundlage B1 handelt es sich um ein Elastomeres, welches eine Glasübergangstemperatur von bevorzugt unterhalb -20°C, besonders bevorzugt unterhalb -30°C aufweist.

Für die Herstellung des Elastomeren werden als Hauptmonomere B11 Ester der Acrylsäure mit 1 bis 10 C-Atomen, insbesondere 4 bis 8 C-Atomen in der Alkoholkomponente eingesetzt. Besonders bevorzugte Monomere B11 sind iso- und n-Butylacrylat sowie 2-Ethylhexylacrylat, von denen die beiden letztgenannten besonders bevorzugt sind.

Neben den Estern der Acrylsäure werden als vernetzendes Monomer B12 0,1 bis 10, bevorzugt 0,1 bis 5, besonders bevorzugt 1 bis 4 Gew.-% eines polyfunktionellen Monomeren mit mindestens zwei olefinischen, nicht konjugierten Doppelbindungen eingesetzt. Beispiele sind Divinylbenzol, Diallylfumarat, Diallylphthalat, Triallylcyanurat, Triallylisocyanurat, Tricylodecenylacrylat und Dihydrodicyclopentadienylacrylat, von denen die beiden zuletzt genannten besonders bevorzugt sind.

Neben den Monomeren B11 und B12 können am Aufbau der Pfropfgrundlage B1 noch bis zu 24,9, vorzugsweise bis zu 20 Gew.-% weiterer copolymerisierbarer Monomere, vorzugsweise Butadien-1,3, Styrol, $\alpha$-Methylstyrol, Acrylnitril, Methacrylnitril und $C_1$-$C_8$-Alkylester der Methacrylsäure oder Mischungen dieser Monomeren beteiligt sein. In einer besonders bevorzugten Ausführungsform enthält die Pfropfgrundlage B1 kein Butadien-1,3, insbesondere besteht die Pfropfgrundlage B1 ausschließlich aus den Komponenten B11 und B 12.

Auf die Pfropfgrundlage B1 ist eine Pfropfauflage B2 aus den Monomeren

b21) 50 bis 90 Gew.-%, vorzugsweise 60 bis 90 Gew.-%, besonders bevorzugt 65 bis 80 Gew.-% eines vinylaromatischen Monomeren als Komponente B21 und

b22) 10 bis 50 Gew.-%, vorzugsweise 10 bis 40 Gew.-%, besonders bevorzugt 20 bis 35 Gew.-% Acrylnitril oder Methacrylnitril oder deren Mischungen

aufgepfropft.

Beispiele für vinylaromatische Monomere sind unsubstituiertes Styrol und substituierte Styrole wie $\alpha$-Methylstyrol, p-Chlorstyrol und p-Chlor-$\alpha$-Methylstyrol. Bevorzug sind unsubstituiertes Styrol und $\alpha$-Methylstyrol, besonders bevorzugt ist unsubstituiertes Styrol.

Gemäß einer Ausführungsform der Erfindung beträgt die mittlere Teilchengröße der Komponente B 50 bis 200 nm, bevorzugt ca. 100 nm.

Gemäß einer weiteren Ausführungsform der Erfindung beträgt die mittlere Teilchengröße der Komponente B 200 bis 1000 nm, bevorzugt ca. 500 nm.

Gemäß einer besonders bevorzugten Ausführungsform der Erfindung ist die Teilchengrößenverteilung der Komponente B bimodal, wobei die Komponente B zu 10 bis 90 Gew.-%, bevorzugt zu 30 bis 90 Gew.-% , besonders bevorzugt zu 50 bis 75 Gew.-% aus einem kleinteiligen Pfropfcopolymerisat mit einer mittleren Teilchengröße von 50 bis 200 nm, bevorzugt ca. 100 nm und zu 10 bis 90 Gew.-%, bevorzugt zu 10 bis 70 Gew.-% ,besonders bevorzugt zu 25 bis 50 Gew.-% aus einem großteiligen Pfropfcopolymerisat mit einer mittleren Teilchengröße von 250 bis 1000 nm, bevorzugt ca. 500 nm, besteht.

Als mittlere Teilchengröße bzw. Teilchengrößenverteilung werden die aus der integralen Massenverteilung bestimmten Größen angegeben. Bei den erfindungsgemäßen mittleren Teilchengrößen handelt es sich in allen Fällen um die Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der dso-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar. Als Komponente A erfindungsgemäß verwendbare Emulsionspolymerisate A weisen vorzugsweise Q-Werte kleiner als 0,5, insbesondere kleiner als 0,35 auf.

Das Pfropfcopolymerisat B ist im allgemeinen ein- oder mehrstufig, d.h. ein aus einem Kern und einer oder mehreren Hüllen aufgebautes Polymerisat. Das Polymerisat besteht aus einer Grundstufe (Pfropfkern) B1 und einer oder - bevorzugt - mehreren darauf gepfropften Stufen B2 (Pfropfauflage), den sogenannten Pfropfstufen oder Pfropfhüllen.

Durch einfache Pfropfung oder mehrfache Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A 0 230 282, DE-A 36 01 419, EP-A O 269 861).

Gemäß einer Ausführungsform der Erfindung dienen als Pfropfgrundlage B1 vernetzte Acrylsäureester-Polymerisate mit einer Glasübergangstemperatur unter 0°C. Die vernetzten Acrylsäureester-Polymerisate sollen vorzugs-

weise eine Glasübergangstemperatur unter -20°C, insbesondere unter -30°C, besitzen.

Prinzipiell ist auch ein mehrschaliger Aufbau des Pfropfcopolymerisats möglich, wobei mindestens eine innere Schale eine Glasübergangstemperatur von unter 0°C und die äußerste Schale eine Glasübergangstemperatur von mehr als 23°C aufweisen sollte.

In einer bevorzugten Ausführmgsform besteht die Pfropfauflage B2 aus mindestens einer Pfropfhülle und die äußerste Pfropfhülle davon hat eine Glasübergangstemperatur von mehr als 30°C, wobei ein aus den Monomeren der Pfropfauflage B2 gebildetes Polymer eine Glasübergangstemperatur von mehr als 80°C aufweisen würde.

Geeignete Herstellverfahren für Pfropfcopolymerisate B sind die Emulsions-, Lösungs-, Masse- oder Suspensionspolymersiation. Bevorzugt werden die Pfropfcopolymerisate B durch radikalische Emulsionspolymerisation hergestellt, bei Temperaturen von 20°C - 90°C unter Verwendung wasserlöslicher und oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Geeignete Emulsionspolymerisationsverfahren sind beschrieben in DE-A-28 26 925, DE-A 31 49 358 und in DE-C-12 60 135.

Der Aufbau der Pfropfhüllen erfolgt vorzugsweise im Emulsionspolymerisationsverfahren wie es beschrieben ist in den DE-A-32 27 555, 31 49 357, 31 49 358, 34 14 118. Das definierte Einstellen der erfindungsgemäßen Teilchengrößen von 50 - 1000 nm erfolgt bevorzugt nach den Verfahren, die beschrieben sind in der DE-C-12 60 135 und DE-A-28 26 925, bzw. Applied Polymer Science, Band 9 (1965), Seite 2929. Das Verwenden von Polymerisaten mit unterschiedlichen Teilchengrößen ist beispielsweise bekannt aus DE-A-28 26 925 und US 5,196,480.

Als Komponente C enthalten die Formmassen 1 bis 50 Gew.-%, bevorzugt 10 bis 25 Gew.-%, besonders bevorzugt 12 bis 20 Gew.-% eines Copolymerisats aus den Monomeren

c1) 75 bis 90 Gew.-%, bevorzugt 77 bis 90 Gew.-%, besonders bevorzugt 81 bis 90 Gew.-%, mindestens eines vinylaromatischen Monomeren als Komponente C1 und

c2) 10 bis 25 Gew.-%, vorzugsweise 10 bis 23 Gew.%, besonders bevorzugt 10 bis 19 Gew.-%, insbesondere 15 bis 19 Gew.-%, Acrylnitril und/oder Methacrylnitril als Komponente C2.

Als vinylaromatische Monomere sind die oben stehend genannten Monomere C1 und die oben stehend als Komponente B21 genannten vinylaromatischen Monomere geeignet. Vorzugsweise ist Komponente C ein amorphes Polymerisat, wie es vorstehend als Pfropfauflage B2 beschrieben ist. Gemäß einer Ausführungsform der Erfindung wird als Komponente C ein Copolymerisat von Styrol und/oder $\alpha$-Methylstyrol mit Acrylnitril verwendet. Der Acrylnitrilgehalt in diesen Copolymerisaten der Komponente C liegt dabei nicht oberhalb 25 Gew.-% und beträgt im allgemeinen 10 bis 25 Gew.-%, bevorzugt 10 bis 22 Gew.-%, besonders bevorzugt 10 bis 19 Gew.-%, insbesondere 15 bis 19 Gew.-%. Zur Komponente C zählen auch die bei der Pfropfcopolymerisation zur Herstellung der Komponente B entstehenden freien, nicht gepfropften Styrol-Acrylnitril-Copolymerisate. Je nach den bei Pfropfcopolymerisation für die Herstellung der Pfropfcopolymerisats A gewählten Bedingungen kann es möglich sein, daß bei der Pfropfcopolymerisation schon ein hinreichender Anteil an Komponente C gebildet worden ist. Im allgemeinen wird es jedoch erforderlich sein, die bei der Pfropfcopolymerisation erhaltenen Produkte mit zusätzlicher, separat hergestellter Komponente C abzumischen.

Bei dieser zusätzlichen, separat hergestellten Komponente C kann es sich vorzugsweise um ein Styrol/Acrylnitril-Copolymerisat, ein $\alpha$-Methylstyrol/Acrylnitril-Copolymerisat oder ein $\alpha$-Methylstyrol/Styrol/Acrylnitril-Terpolymerisat handeln. Wesentlich ist, daß der Gehalt an Acrylnitril in den Copolymerisaten C 25 Gew.-%, insbesondere 19 Gew.-% nicht übersteigt. Die Copolymerisate können einzeln oder auch als Gemisch für die Komponente C eingesetzt werden, so daß es sich bei der zusätzlichen, separat hergestellten Komponente C der erfindungsgemäßen Formmassen beispielsweise um ein Gemisch aus einem Styrol/Acrylnitril-Copolymerisat (PSAN) und einem $\alpha$-Methylstyrol/Acrylnitril-Copolymerisat handeln kann. Auch der Acrylnitrilgehalt der verschiedenen Copolymerisate der Komponente C kann unterschiedlich sein. Vorzugsweise besteht die Komponente C jedoch nur aus einem oder mehreren Styrol/Acrylnitril-Copolymerisaten, wobei die Copolymerisate einen unterschiedlichen Gehalt an Acrylnitril aufweisen können. In einer insbesonderen bevorzugten Ausführungsform besteht die Komponente C aus nur einem Styrol/Acrylnitril-Copolymerisat.

Als Komponente D enthalten die Formmassen 1 bis 50 Gew.-%, bevorzugt 5 bis 50 Gew.-%, besonders bevorzugt 7 bis 45 Gew.-%, insbesondere 10 bis 40 Gew.-% an Glasfasern. Dabei handelt es sich um kommerziell erhältliche Produkte.

Diese haben in der Formmasse im allgemeinen eine mittlere Länge von 0,1 bis 0,5 mm, vorzugsweise 0,1 bis 0,4 mm und einen Durchmesser im Bereich von 6 bis 20 $\mu$m. Besonders bevorzugt sind Glasfasern aus E-Glas. Zur Erzielung einer besseren Haftung können die Glasfasern mit Organosilanen, Epoxisilanen oder anderen Polymerüberzügen beschichtet sein.

Als Komponente E können die Formmassen 0 bis 25 Gew.-% weitere, mit den Komponenten A und/oder C homogen mischbare oder in diesen dispergierbare Polymere enthalten. Es können beispielsweise einschlägig übliche (gepfropfte) Kautschuke Verwendung finden, wie Ethylen-Vinylacetat-Kautschuke, Siliconkautschuke, Polyetherkautschuke, hydrierte Dienkautschuke, Polyalkenamerkautschuke, Acrylatkautschuke, Ethylen-Propylen-Kautschuke, Ethylen-Propylen-Dien-Kautschuke und Butylkautschuke, Methylmethacrylat-Butadien-Styrol (MBS)-Kautschucke, Methylmethacrylat-Butylacrylat-Styrol-Kautschuke, sofern diese mit der aus den Komponenten A, B und C gebildeten Mischphase mischbar bzw. in dieser dispergierbar sind. Bevorzugt werden Acrylatkautschuk, Ethylen-Propylen(EP)-Kautschuk, Ethylen-Propylen-Dien(EPDM)-Kautschuk Verwendung finden. In Frage kommen ferner mit der aus den Komponenten B und C gebildeten Mischphase verträgliche bzw. mischbare Polymere oder Copolymere wie Polycarbonate, Polymethacrylate, insbesondere PMMA, Polyphenylenether oder syndiotaktisches Polystyrol. In Frage kommen ferner Reaktivkautschuke, die an den Polyester (Komponente A) über eine kovalente Bindung anbinden, wie mit Säureanhydriden, wie Maleinsäureanhydrid, oder Epoxy-Verbindungen, wie Glycidyl-Methacrylat, gepfropfte Polyolefinkautschuke und/oder partikuläre Acrylatkautschuke. Schließlich ist auch die Verwendung eines oder mehrerer Polymere bzw. Copolymere möglich, die in der Grenzfläche zwischen der aus den Komponenten B und/oder C gebildeten amorphen Phase und der aus der Komponente A gebildeten kristallinen oder teilkristallinen Phase vorliegen und so für eine bessere Anbindung der beiden Phasen sorgen. Beispiele solcher Polymere sind Pfropfcopolymere aus PBT und PSAN oder segmentierte Copolymere wie Block-Copolymere oder Multiblock-Copolymere aus mindestens einem Segment aus PBT mit $M_w > 1000$ und mindestens einem Segment aus PSAN oder einem mit PSAN verträglichen/mischbaren Segment mit $M_w > 1000$.

Als Komponente F enthalten die Formmassen 0 bis 10 Gew.-% übliche Zusatzstoffe. Als solche Zusatzstoffe seien beispielsweise genannt: UV-Stabilisatoren, Oxidationsverzögerer, Gleit- und Entformungsmittel, Farbstoffe, Pigmente, Färbemittel, Keimbildungsmittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier/Gleitmittel, die für die Herstellung von Fonnkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Geeignete Stabilisatoren sind die üblichen gehinderten Phenole, aber auch Vitamin E bzw. analog aufgebaute Verbindungen. Auch HALS-Stabilisatoren (Hindered Amine Light Stabilizers), Benzophenone, Resorcine, Salicylate, Benzotriazole und andere Verbindungen sind geeignet (beispielsweise Irganox®, Tinuvin®, wie Tinuvin® 770 (HALS-Absorber, Bis (2,2,6,6-tetramethyl-4-piperidyl)sebacat) oder Tinuvin®P (UV-Absorber - (2H-Benzotriazol-2-yl)-4-methylphenol), Topanol®). Diese werden üblicherweise in Mengen bis zu 2 Gew.-% (bezogen auf das Gesamtgemisch) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 - 30 Kohlenstoffatomen. Die Mengen dieser Zusätze liegen im Bereich von 0,05 - 1 Gew.-%.

Auch Siliconöle, oligomeres Isobutylen oder ähnliche Stoffe kommen als Zusatzstoffe in Frage; die üblichen Mengen betragen 0,05 - 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar. Als Zusatzstoff kann ferner Ruß sowohl rein als auch als Masterbatch eingesetzt werden.

Verarbeitungshilfsmittel und Stabilisatoren wie UV-Stabilisatoren, Schmiermittel und Antistatika werden üblicherweise in Mengen von 0,01 - 5 Gew.-% verwendet, bezogen auf die gesamte Formmasse.

Auch Keimbildungsmittel, wie Talkum, Calciumfluorid, Natriumphenylphosphinat, Aluminiumoxid oder feinteiliges Polytetrafluorethylen können in Mengen z.B. bis zu 5 Gew.-%, bezogen auf die gesamte Formmasse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 5 Gew.-%, bezogen auf die Formmasse, zugesetzt. Färbemittel, wie Farbstoffe und Pigmente können in Mengen bis zu etwa 5 Gew.-%, bezogen auf die Formmasse, zugesetzt werden.

Das Mischen der Komponenten A, B, C, D und gegebenenfalls E und F kann nach jeder beliebigen Weise nach allen bekannten Methoden erfolgen. Beim Mischen können die Komponenten A - D und gegebenenfalls E und F als solche oder auch in Form von Mischungen der einen Komponente mit einer oder mehreren der anderen Komponenten eingesetzt werden. Beispielsweise kann die Komponente B mit einem Teil oder der gesamten Komponente C und gegebenenfalls den Komponenten E und F vorgemischt und anschließend mit den übrigen Komponenten gemischt werden. Wenn die Komponenten B und C beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen der Komponenten B und C durch gemeinsames Exdrudieren, Kneten oder Verwalzen der Komponenten, weobei die Komponenten B und C, sofern erforderlich, zuvor aus der bei der Polymerisation erhaltenen Lösung oder wässrigen Dispersion isoliert worden sind. Die erfindungsgemäßen thermoplastischen Formmassen können beispielsweise hergestellt werden, indem man die Komponente A mit jeweils den Komponenten B und C oder mit einer Mischung aus diesen, und gegebenenfalls mit den Komponenten E und F mischt, in einem Extruder aufschmilzt und die Glasfasern über ein Einlaß am Extruder zuführt.

Die Formmassen können nach den bekannten Verfahren der Thermoplastverarbeitung zu Formteilen verarbeitet werden. Insbesondere kann deren Herstellung durch Thermoformen, Extrudieren, Spritzgießen, Kalandrieren, Hohlkörperblasen, Pressen, Preßsintem, Tiefziehen oder Sintern, vorzugsweise durch Spritzgießen erfolgen.

Die aus den Formmassen hergestellten Formteile weisen nur geringe Emissionen an flüchtigen Bestandteilen mit einem wahrnehmbaren Geruch auf. Das Geruchsverhalten von Polymerwerkstoffen wird nach DIN 50011 / PV 3900 beurteilt und gilt für Bauteile des Fahrzeuginnenraums. Das Ergebnis der Geruchsprüfung nach dieser Norm ist im Falle der Formteile im allgemeinen besser als Note 5, bevorzugt besser als Note 4, besonders bevorzugt besser als Note 3,5. Die Kohlenstoff-Emission der Formteile nach PV 3341 ist im allgemeinen < 50 $\mu$g/g, bevorzugt < 40 $\mu$g/ g, besonders bevorzugt < 30 $\mu$g/g.

Die Formteile weisen weiterhin eine gute Wärmeformbeständigkeit auf. Die Vicat B-Erweichungstemperatur ist im allgemeinen > 130°C, bevorzugt > 140°C, besonders bevorzugt > 150°C.

Die Formteile weisen ferner ein gutes Wärmealterungsverhalten auf. So ist die Schlagzähigkeit der erfindungsgemäßen Formteile nach ISO 179/1eU nach 1000 Stunden dauernder Wärmelagerung bei 130°C im allgemeinen > 25 kJ pro m$^2$, bevorzugt > 30 kJ pro m$^2$. Die Bruchdehnung der erfindungsgemäßen Formteile ist nach 1000 Stunden dauernder Wärmelagerung bei 130°C im allgemeinen > 1,5%, bevorzugt > 2%.

Die Formteile weisen ferner gute mechanische Eigenschaften auf. So ist ihr Elastizitätsmodul im allgemeinen > 6000, bevorzugt > 6500 MPa, ihre Streckspannung im allgemeinen > 100, bevorzugt > 110 MPa, ihre Schlagzähigkeit nach ISO 179/1eU im allgemeinen > 40, bevorzugt > 45 kJ pro m$^2$, ihre Schlagzähigkeit ohne vorherige Wärmelagerung nach ISO 179/1eA, im allgemeinen > 6 kJ pro m$^2$ und ihre HDT B (gemessen nach ISO 75, Ausführungsform B) im allgemeinen > 190°C, bevorzugt > 200°C und ihre Fließfähigkeit (MVR 250°C/10 kp Auflagekraft) > 20, bevorzugt > 40 g/cm$^3$.

Die Formteile weisen, auch nach 1000 h dauerender Wärmelagerung bei 130°C, bei -30°C kein Splitterverhalten im Durchstoßversuch (2 und 3 mm Plattendurchmesser, gemäß ISO 6603/2) auf.

Aufgrund ihres guten Emissionsverhaltens sind die erfindungsgemäßen Formteile insbesondere für Anwendungen im Kraftfahrzeug-Innenraum geeignet. Formteile sind daher insbesondere aus den Formmassen hergestellte Abdeckungen, Ablagefächer, Instrumententafelträger, Türbrüstungen, Teile für die Mittelkonsole sowie Halterungen für Radio und Klimaanlage, Blenden für die Mittelkonsole, Blenden für Radio, Klimaanlage und Aschenbecher, Verlängerungen der Mittelkonsole, Stautaschen, Ablagen für die Fahrer und Beifahrertür, Ablagen für die Mittelkonsole, Bauteile für den Fahrer- und den Beifahrersitz, wie Sitzverkleidungen, Defrosterkanal, Innenspiegelgehäuse, Schiebedachelemente wie Schiebedachrahmen, Instrumentenhutzen, Instrumentenfassungen, Ober- und Unterschale für den Lenkstock, Luftführungskanäle, Luftausströmer und Zwischenstücke für Personenanströmer und Defrosterkanal, Türseitenverkleidungen, Verkleidungen im Kniebereich, Luftaustrittsdüsen, Entfrosteröffnungen, Schalter und Hebel. Diese Anwendungen stehen nur beispielhaft für denkbare Kraftfahrzeug-Innenanwendungen.

Gegenstand der Erfindung ist die Verwendung der Formmassen für die Herstellung der genannten Formteile.

Die Erfindung wird durch die nachstehenden Beispiele näher erläutert:

**Beispiele:**

Beispiele 1 bis 4 und Vergleichsbeispiel

Entsprechend den Angaben in der nachstehenden Tabelle 1 werden die angegebenen Mengen Polybutylenterephthalat (PBT), Standard- bzw. Recyclat-Polyethylenterephthalat (PET), Glasfasern Pfropfkautschuke P1 und P2, Copolymerisate PSAN 1, PSAN 2 und PSAN 3 und Additive in einem Schneckenextruder bei einer Temperatur von 250°C bis 270°C gemischt. Aus den dadurch gebildeten Formmassen werden die den betreffenden DIN-Normen entsprechenden Probekörper spritzgegossen.

P1 ist ein kleinteiliger ASA-Pfropfkautschuk mit 25 Gew.-% Acrylnitril in der SAN-Pfropfhülle mit einer mittleren Teilchengröße von ca. 100 nm.

P2 ist ein großteiliger ASA-Pfropfkautschuk mit einem mittleren Teilchendurchmesser von ca. 500 nm.

PSAN 1 ist ein Styrol/Acrylnitril-Copolymerisat mit 25 Gew.-% Acrylnitril.

PSAN 2 ist ein Styrol-/Acrylnitril-Copolymerisat mit 19 Gew.-% Acrylnitril.

PSAN 3 ist ein Styrol-/Acrylnitril-Copolymerisat mit 35 Gew.-% Acrylnitril.

Die Beurteilung des Emissionsverhaltens erfolgte nach DV 3341 sowie nach DIN 50011/PV 3900 C3.

Die Messung der Geruchsemission nach DIN 50011/PV3900 C3 erfolgte wie folgt:

In einem 1 l-Gefäß mit geruchsneutraler Dichtung und Deckel wurde eine Probekörpermenge von 50 cm$^3$ fest verschlossen und in einer vorgeheizten Wärmekammer mit Luftumwälzung bei 80°C während 2 Stunden gelagert. Nach Entnahme des Prüfgefäßes aus der Wärmekammer wurde das Prüfgefäß auf 60°C abgekühlt, bevor die Bewertung durch mindestens 3 Prüfer erfolgte. Die Geruchsbeurteilung erfolgt anhand der Bewertungsskala mit den Noten 1 bis 6, wobei halbe Zwischenschritte möglich sind.

Bewertungsskala:

Note 1     nicht wahrnehmbar
Note 2     wahrnehmbar, nicht störend
Note 3     deutlich wahrnehmbar, aber noch nicht störend
Note 4     störend
Note 5     stark störend
Note 6     unerträglich

Tabelle 2 enthält die Ergebnisse der Geruchsprüfung sowie die Ergebnisse der darüber hinaus durchgeführten mechanischen Prüfungen.

Tabelle 1:

| Einsatzstoff [Gew.-%] | Vergleichsbeispiel | Beispiel 1 | Beispiel 2 | Beispiel 3 |
|---|---|---|---|---|
| PBT | 46,62 | 46,62 | 46,62 | 46,62 |
| Glasfaser | 20 | 20 | 20 | 20 |
| PET | 9 | 9 | 9 | |
| P 1 | 12 | 3 | 3 | |
| P 2 | | 2 | 2 | 12 |
| PSAN 1 | | 17 | | |
| PSAN 2 | | | 16 | 10 |
| PSAN 3 | 10 | | | |
| Loxiol | 0,58 | 0,58 | 0,58 | 0,58 |
| Ruß | 1,8 | 1,8 | 1,8 | 1,8 |

Tabelle 2:

| | Vergleichsbeispiel | Beispiel 1 | Beispiel 2 | Beispiel 3 |
|---|---|---|---|---|
| Fließfähigkeit nach MVR 250/10 [cm$^3$/10 min] | 18 | 16 | 58 | 25 |
| Dichte [g/cm$^3$] | 1,391 | 1,388 | 1,367 | 1,372 |
| Schlagzähigkeit nach ISO 179/1eU | 49 | 48 | 52 | 53 |
| Kerbschlagzähigkeit nach ISO 179/1eA [kJ/m$^2$] | 6,7 | 7,0 | 7,2 | 7,6 |
| Elastizitätsmodul nach DIN 53457 [MPa] | 6850 | 7600 | 7600 | 6800 |
| Bruchspannung nach DIN 53457 [MPa] | 103 | 118 | 120 | 103 |
| Bruchdehnung nach DIN 53457 [%] | 2,4 | 2,3 | 2,5 | 2,4 |

Tabelle 2:   (fortgesetzt)

|  | Vergleichsbeispiel | Beispiel 1 | Beispiel 2 | Beispiel 3 |
|---|---|---|---|---|
| Durchstoßarbeit nach ISO 6603/2 [Nm] | 2,5 | 2 | 3 | 3 |
| HDT nach ISO 75 B [°C] | 208 | 207 | 205 | 203 |
| Geruchsprüfung nach PV 3900 C3 [Note] | 4 | 3,5 | 3 | 3,5 |
| Kohlenstoff-Emission nach PV 3341 [µg C/g] | 70 | 38 | 28 | 38 |

**Patentansprüche**

1.  Verwendung glasfaserverstärkter thermoplastischer Formmassen, enthaltend, bezogen auf die Summe der Komponenten A bis D und gegebenenfalls E und F, die insgesamt 100 Gew.-% ergibt,

    a) 10 bis 97 Gew.-% mindestens eines aromatischen Polyesters als Komponente A,

    b) 1 bis 50 Gew.-% mindestens eines teilchenförmigen Pfropfcopolymerisats mit einer Glasübergangstemperatur der Weichphase unterhalb von 0°C und einer mittleren Teilchengröße von 50 bis 1000 nm als Komponente B,

    c) 1 bis 50 Gew.-% mindestens eines Copolymerisats aus den Monomeren

    c1) 50 bis 90 Gew.-% mindestens eines vinylaromatischen Monomeren als Komponente C1 und
    c2) 10 bis 25 Gew.-% Acrylnitril und/oder Methacrynitril als Komponente C2,

    als Komponente C,

    d) 1 bis 50 Gew.-% Glasfasern als Komponente D,

    e) 0 bis 25 Gew.-% weitere, mit den Komponenten A und/oder C homogenen mischbare oder in diesen dispergierbare, verträgliche Polymere als Komponente E,

    f) 0 bis 10 Gew.-% übliche Zusatzstoffe wie UV-Stabilisatoren, Oxidationsverzögerer, Gleit- und Entformungsmittel als Komponente F,

    zur Herstellung von Formteilen für den Innenraum von Kraftfahrzeugen.

2.  Verwendung nach Anspruch 1, **dadurch gekennzeichnet, daß** die Komponente A besteht aus

    a1) 60 bis 99 Gew.-% Polybutylenterephthalat und

    a2) 1 bis 40 Gew.-% Polyethylenterephthalat.

3.  Verwendung nach Anspruch 1 oder 2, **dadurch gekennzeichnet, daß** die Komponente B besteht aus

    b1) 50 bis 90 Gew.-% einer teilchenförmigen Pfropfgrundlage B 1 aus den Monomeren

    b1.1) 75 bis 99,9 Gew.-% eines $C_1$-$C_{10}$-Alkylesters der Acrylsäure als Komponente B 11,

    b1.2) 0,1 bis 10 Gew.-% mindestens eines polyfunktionellen Monomeren mit mindestens zwei olefinischen, nicht konjugierten Doppelbindungen als Komponente B 12 und

    b1.3) 0 bis 24,9 Gew.-% eines oder mehrerer weiterer copolymerisierbarer Monomere als Komponente B 13,

    und

b2) 10 bis 50 Gew.-% einer Pfropfauflage B2 aus den Monomeren

b2.1) 50 bis 90 Gew.-% eines vinylaromatischen Monomeren als Komponente B21 und

b2.2) 10 bis 50 Gew.-% Acrylnitril und/oder Methacrylnitril als Komponente B22.

4. Verwendung nach einem der Ansprüche 1 bis 3, **dadurch gekennzeichnet, daß** die Komponenten B21 und/oder C1 unsubstituiertes Styrol sind.

5. Verwendung nach einem der Ansprüche 1 bis 4, **dadurch gekennzeichnet, daß** die Komponente B1 aus den Komponenten B 11 und B 12 besteht.

**Claims**

1. The use of a glass-fiber-reinforced thermoplastic molding composition comprising, based on the total of components A to D and, if desired, E and F, which in total give 100% by weight,

a) as component A, from 10 to 97% by weight of at least one aromatic polyester,

b) as component B, from 1 to 50% by weight of at least one particulate graft copolymer whose soft phase has a glass transition temperature below 0°C and whose median particle size is from 50 to 1000 nm,

c) as component C, from 1 to 50% by weight of at least one copolymer made from the following monomers

c1) a component C1, from 50 to 90% by weight of at least one vinylaromatic monomer, and

c2) as component C2, from 10 to 25% by weight of acrylonitrile and/or methacrylonitrile,

d) as component D, from 1 to 50% by weight of glass fibers,

e) as component E, from 0 to 25% by weight of other compatible polymers homogeneously miscible with components A and/or C or dispersible in these, and

f) as component F, from 0 to 10% by weight of conventional additives, such as UV stabilizers, oxidation retarders, lubricants and mold-release agents,

for producing moldings for motor vehicle interiors.

2. The use as claimed in claim 1, wherein component A is composed of

a1) from 60 to 99% by weight of polybutylene terephthalate and

a2) from 1 to 40% by weight of polyethylene terephthalate.

3. The use as claimed in claim 1 or 2, wherein component B is composed of

b1) from 50 to 90% by weight of a particulate graft base B1 made from the following monomers

b1.1) as component B11, from 75 to 99.9% by weight of a $C_1$-$C_{10}$-alkyl acrylate,

b1.2) as component B12, from 0.1 to 10% by weight of at least one polyfunctional monomer having at least two nonconjugated olefinic double bonds, and

b1.3) as component B13, from 0 to 24.9% by weight of one or more other copolymerizable monomers,

and

b2) from 10 to 50% by weight of a graft B2 made from the following monomers

b2.1) as component B21, from 50 to 90% by weight of a vinylaromatic monomer, and

b2.2) as component B22, from 10 to 50% by weight of acrylonitrile and/or methacrylonitrile.

**4.** The use as claimed in any one of claims 1 to 3, wherein components B21 and/or C1 are unsubstituted styrene.

**5.** The use as claimed in any one of claims 1 to 4, wherein component B1 is composed of components B11 and B12.

**Revendications**

**1.** Utilisation de polymères thermoplastiques renforcés de fibres de verre contenant, par rapport à la somme des composants A à D et éventuellement E et F, lesquels totalisent 100% en poids,

a) de 10 à 97% en poids d'au moins un polyester aromatique en tant que composant A,
b) de 1 à 50% en poids d'au moins un copolymère greffé particulaire ayant une température de transition vitreuse de la phase molle de moins de 0°C et une taille moyenne de particules de 50 à 1000 nm en tant que composant B,
c) de 1 à 50% en poids d'au moins un copolymère constitué des monomères suivants:

c1) 50 à 90% en poids d'au moins un monomère vinylaromatique en tant que composant C1 et
c2) 10 à 25% en poids d'acrylonitrile et/ou de méthacrylonitrile en tant que composant C2,

en tant que composant C,
d) de 1 à 50% en poids de fibres de verre en tant que composant D,
e) de 0 à 25% en poids d'autres polymères compatibles avec, miscibles de manière homogène avec ou dispersibles dans les composants A et/ou C, en tant que composant E,
f) de 0 à 10% en poids d'additifs usuels tels que des stabilisants aux UV, des inhibiteurs d'oxydation, des lubrifiants et des agents de démoulage en tant que composant F,

pour la préparation de pièces moulées destinées à l'intérieur de véhicules automobiles.

**2.** Utilisation selon la revendication 1, **caractérisée en ce que** le composant A est constitué de

a1) 60 à 99% en poids de polybutylène téréphtalate et
a2) 1 à 40% en poids de polyéthylène téréphtalate.

**3.** Utilisation selon la revendication 1 ou 2, **caractérisée en ce que** le composant B est constitué de

b1) 50 à 90% en poids d'une base de greffage particulaire B1 constituée des monomères suivants:

b1.1) 75 à 99,9% en poids d'un ester alkylique en $C_1$ à $C_{10}$ de l'acide acrylique en tant que composant B11,
b1.2) 0,1 à 10% en poids d'au moins un monomère polyfonctionnel comportant au moins deux doubles liaisons oléfiniques non conjuguées en tant que composant B12 et
b1.3) 0 à 24,9% en poids d'un ou plusieurs autres monomères copolymérisables en tant que composant B13,

et
b2) 10 à 50% en poids d'une enveloppe de greffage B2 constituée des monomères suivants:

b2.1) 50 à 90% en poids d'un monomère vinylaromatique en tant que composant B21 et
b2.2) 10 à 50% en poids d'acrylonitrile et/ou de méthacrylonitrile en tant que composant B22.

**4.** Utilisation selon l'une quelconque des revendications 1 à 3, **caractérisée en ce que** les composants B21 et/ou C1 sont du styrène non substitué.

5. Utilisation selon l'une quelconque des revendications 1 à 4, **caractérisée en ce que** le composant B1 est constitué des composants B11 et B12.